# EUROPEAN PATENT APPLICATION

(11) **EP 3 603 921 A1**
(43) Date of publication of application: **05.02.2020**
(21) Application number: 18425061.1
(22) Date of filing: 02.08.2018
(51) Int. Cl.: B29C 33/40, A45D 40/16, B29C 67/24, B29C 33/36, B29C 33/38, B29C 33/50, B29C 39/00, B29C 39/26, B29K 91/00

(54) **PROCESS, MACNHINE AND MOLD FOR MOLDING STICKS OF COSMETIC OR MEDICAMENT PRODUCTS SUCH AS LIPSTICKS**

(71) Applicant: CMI Engineering S.r.l., 20123 Milano (IT)
(72) Inventor: Comoli, Franco, 28050 Pombia (NO) (IT)
(74) Representative: Bonatto, Marco

(57) **Abstract**

The process for molding sticks (**13**) of cosmetic products such as lipsticks, lip glosses, lip balms, comprises the following operations: S**.1**.**1**) providing one or more molds for sticks (**3**); S**.1**.**2**) casting into the mold for sticks (**3**) the fluid material that will form the stick (**13**) and making it harden therein; S**.1**.**3**) removing from the mold for sticks (**3**) the fastening mold portion (**30**) exposing the fastening portion (**130**) of the stick (**13**); extracting S**.1**.**4**) the hardened stick (**13**) from the mold for sticks (**3**)**.** The process allows more aggressive materials be processed and sticks be obtained which are free of aesthetic defects.

## Description

### Field of the invention

The present invention relates to a machine for producing cosmetic, protective or medicinal products in stick form, for example lipsticks, lip glosses or lip balms packages, and a process for operating it.

### State of the art

Some constant needs in the manufacture of lipsticks are to eliminate even the tiniest aesthetic defect on the surface of the consumable stick - in particular on its sides - based on wax and pigments - also called "stick" in the English technical jargon - and to increase, insofar as possible, mechanical strength, and in particular resistance to falls, of the tube of complete and finished lipstick.

One of the main, most widely used tests to assess the mechanical strength of a lipstick case is the so-called "drop test", consisting of dropping the complete case for three times on a rigid floor, from a height of 30-90 centimetres; the test is passed if the stick of lipstick does not become detached from the rest of case, i.e. from the part called "casing" ("macchinetta" in the Italian technical jargon).

However, these needs contrast with the need, which is just as constant and equally old, to reduce production costs, oftentimes increasingly automating the production cycle.

A purpose of the present invention is to provide a process and a plant for manufacturing lipsticks and other cosmetic, protective and/or medicinal products as consumable sticks, with fewer aesthetic defects than known processes and plants and better suited to implement a more automated production process than known processes and plants.

### Summary of the invention

Said purpose is achieved, according to a first aspect of the present invention, with a process having the characteristics according to claim **1**.

In a particular embodiment of said process, the tip portion (**32**) of the mold (**3**) forms a first part (**324**) of the molding cavity of the mold (**3**).

In a particular embodiment of said process, the fastening portion (**30**) of the mold (**3**) forms a second part (**304**) of the molding cavity of the mold (**3**).

In a particular embodiment of said process, said second part (**304**) of the molding cavity has substantially cylindrical shape, possibly tapered, so as to facilitate the extraction of the stick from the mold (**3**).

In a second aspect of the invention, said purpose is achieved with a machine having the characteristics according to claim **11.**

In a third aspect of the invention, said purpose is achieved with a mold having the characteristics according to claim **12.**

Further features of the invention are set forth in the dependent claims.

The advantages attainable with the present invention shall become more readily apparent, to the person skilled in the art, by the following detailed description of a particular, non-limiting example of embodiment, illustrated with reference to the following schematic figures.

### List of Figures

Figure **1** shows a top view of a machine for manufacturing cosmetic or medicinal products for example in stick form, according to a particular embodiment of the present invention;
Figure **2** shows a first perspective view of the continuous conveyor of the machine of Figure **1****;**
Figure **3** shows a second perspective view of the continuous conveyor of the machine of Figure **1****;**
Figure **4** shows a perspective view of a carriage or saddle of the continuous conveyor of the machine of Figure **1** and of a fastening plate laid thereon;
Figure **5** shows a partially sectioned lateral view of the carriage or saddle and of the fastening plate of Figure **4****;**
Figure **6** shows a lateral view of a stick of lipstick;
Figure **7** shows a lateral sectioned view of a tip portion of a mold of the machine of Figure **1****;**
Figure **8** shows a front view of the demolding and casting stations of the machine of Figure **1****;**
Figure **9** shows a perspective view of the demolding and casting stations of the machine of Figure **1****;**
Figure **10** shows a lateral view of the demolding station of Figure **8****,** sectioned according to the section plane IX-IX;
Figure **11** shows a perspective top view of the fastening plate of Figure **4****;**
Figure **12** shows a perspective top view of the fastening plate of Figure **4****;**

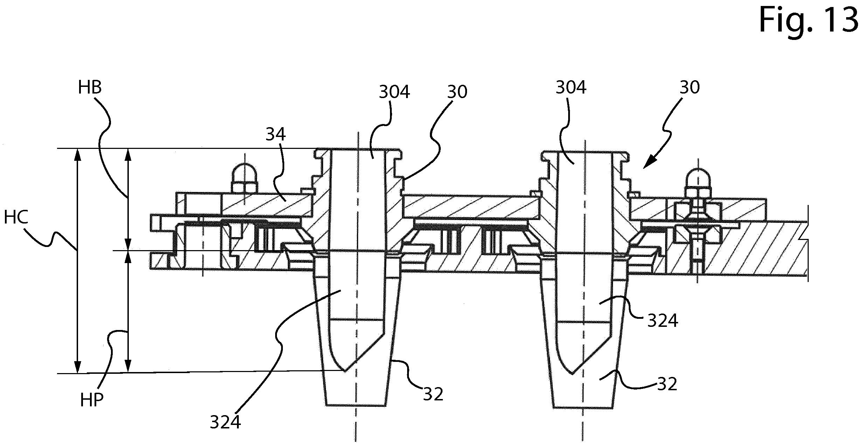

Figure **13** shows a partially sectioned lateral view with a detail of the carriage or saddle and of the fastening plate of Figure **4****.**

### Detailed description

In the present description, the expression "material based on substance X", unless otherwise specified, means that such material contains at least **50%** by weight of the substance X.

The expressions "above, below, high, low, horizontal, vertical", unless otherwise specified are referred to the machine **1** installed for its normal operation.

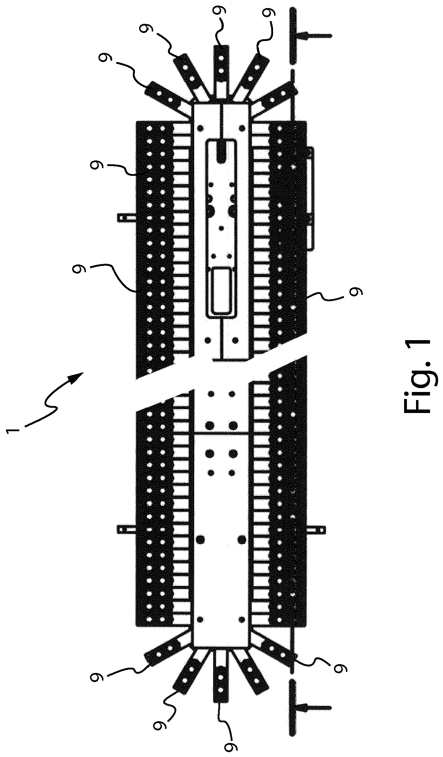

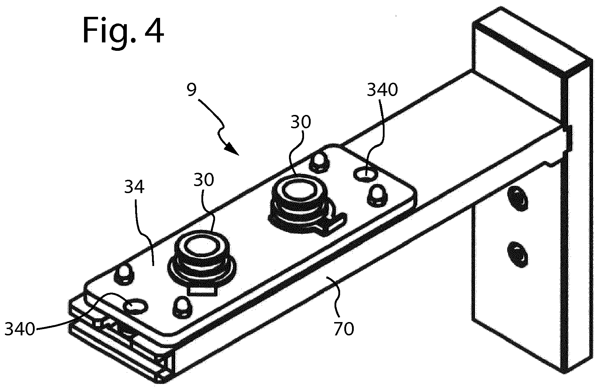

Figures **1-12** relate to a machine and a process for manufacturing cosmetic or medicinal products, indicated with the overall reference numeral **1,** according to a particular embodiment of the present invention.

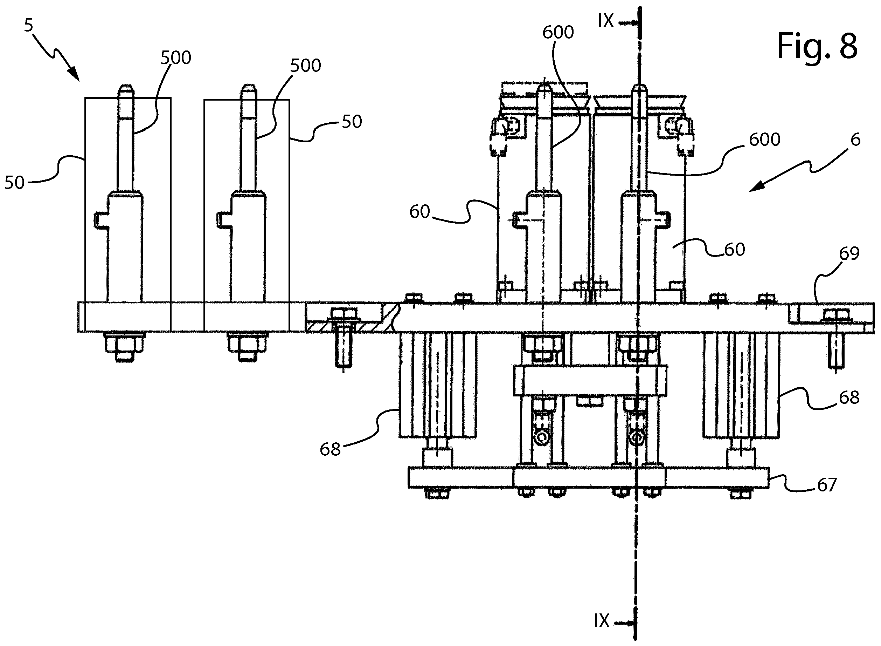

The machine **1** preferably comprises:
- a plurality of molds **3;**
- a casting station **5** arranged for casting fluid material into each of the molds **3** (Figures **8****,** **9****,** **10****);**
- a demolding station **6,** arranged for extracting from the molds **3** their solidified content;
- a continuous conveyor **7** arranged for conveying the plurality of mold **3** from the casting station to the demolding station **6** and/or vice versa.

Each mold **3** is arranged for giving to the contained fluid material a shape substantially as a cylinder, rod, bar, cone, ogive, or stick.

The continuous conveyor **7** can comprise for example a plurality of carriages or skids **9,** often called *pallets* in the Italian technical jargon of the sector, and a guide **10** along which such carriages or skids slide, where each carriage or skid is arranged for transporting at least one mold **3.**

The set of carriages or skids can be driven for example by a chain.

As in the embodiment of Figures **1-12****,** the continuous conveyor **7** can be arranged for moving the plurality of molds **3** along a substantially non-circular route, and preferably closed on itself in a loop.

As shown in Figure **1****,** the continuous conveyor **7** can be arranged for moving the plurality of molds **3** along a path having an overall shape that is substantially oblong, approximately rectangular or in shape of a rectangle with its ends rounded ("obround").

In other embodiments, not shown herein, however, the continuous conveyor can move the molds **3** along a path whose overall shape is for example variously lobed, oval, arched, L-shaped, T-shaped, polygonal, elliptical.

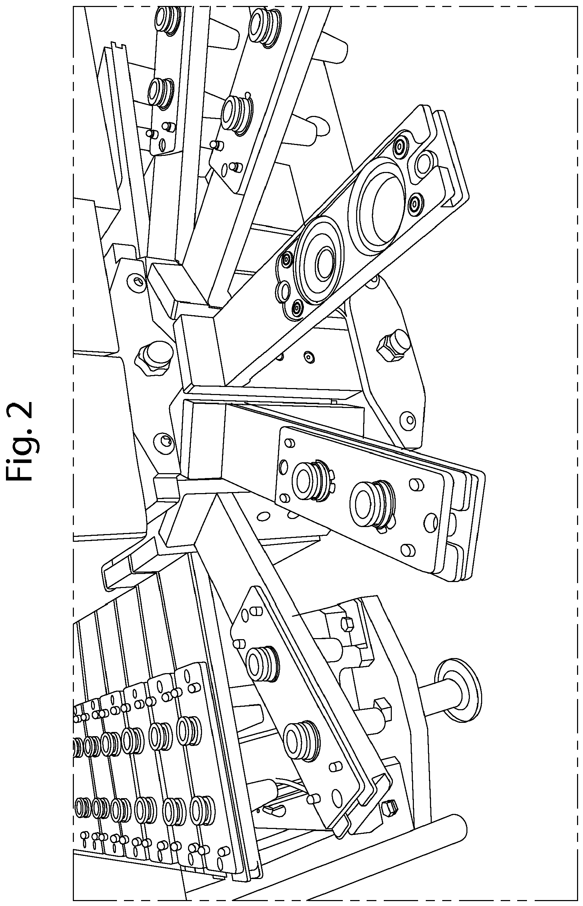

Each carriage or skid **7** can have the overall shape of an L-shaped bracket, comprising a support arm **70** which during the normal operation of the machine **1** extends in substantially horizontal direction (Figures **2-5**) .

Each mold **3** comprises:
- a fastening portion **30** made of a substantially more rigid material and which forms at least a portion of the molding cavity;
- a tip portion **32** made of a substantially softer and more flexible material than the material of the fastening mold portion **30.**

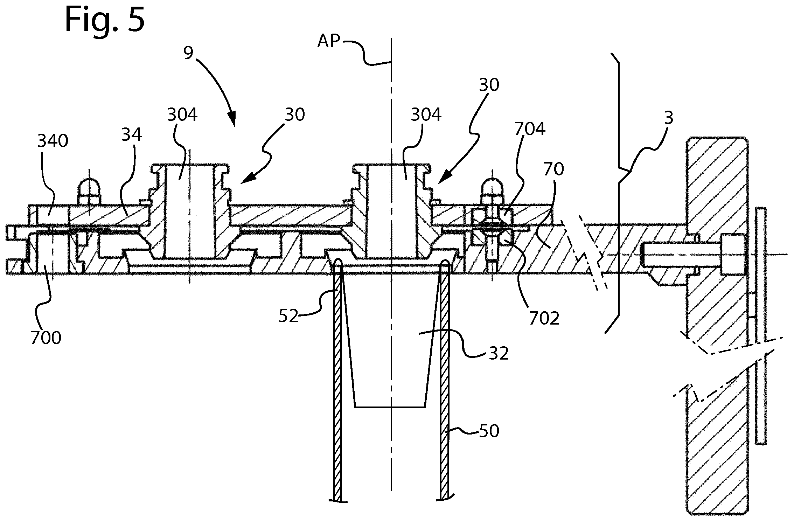

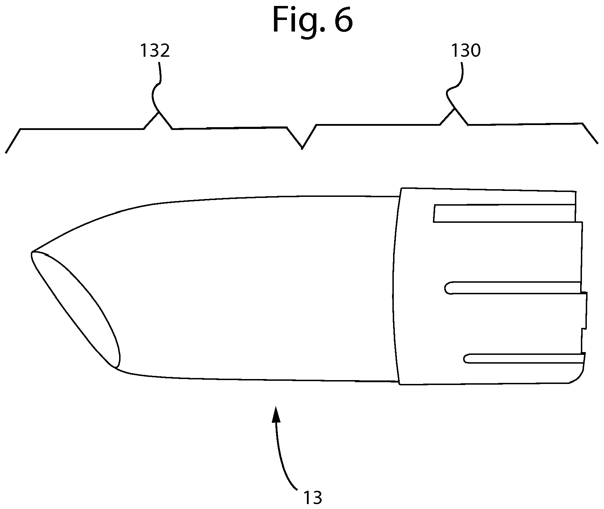

The fastening portion **30** of the mold **3** is arranged for forming at least the fastening portion **130** through which the stick **13** is fastened to the rest of the case - the "casing", in the technical jargon of lipstick manufacturers, "macchinetta" in the technical jargon of Italian lipstick manufacturers - of the complete cosmetic, protective and/or medicinal product and the tip portion **32** of the mold is arranged for forming at least the tip portion **132** of the finished stick **13** (Figure **5****,** **6**).

The fastening portion **30** of the mold **3** is advantageously made of metal and it preferably has the overall shape of a metal bushing or otherwise of a substantially tubular body.

More preferably the fastening portion **30** of the mold **3** is made of ERGAL and/or AVIONAL PEEK.

The adoption of metallic materials makes sticks of lipstick **13** more resistant to the drop test and in general to mechanical stresses.

The tip portion **32** of the mold, in the current Italian technical jargon, is called "ogive" and it is advantageously made of one or more of the following materials: a polymeric and/or elastomeric material, a silicone-based material, and preferably comprising at least 75-90% of silicone by weight, a material with hardness comprised between 5 and 40 Shore A, more preferably comprised between 8 and 20 Shore A degrees.

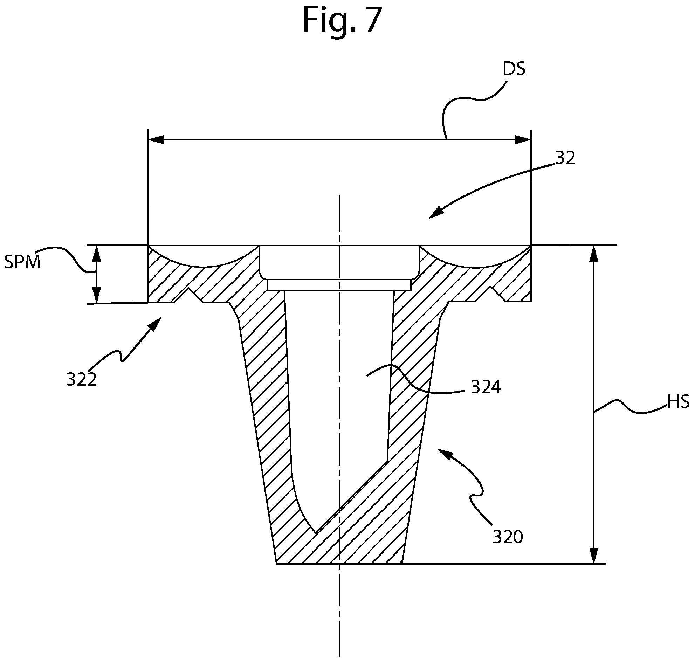

Advantageously, the tip portion **32** forms an oblong extension **320** for example cylindrical, cone frustum shaped (Figure **7**) or cylindrical with tapered tip, and a flange **322** that extends around one end of the oblong extension **320** substantially in a perpendicular plane to the central axis of the oblong extension **320.**

The flange **322** is preferably circular.

The flange **322** and the oblong extension **320** form in their interior a first portion **324** of the molding cavity of the mold **3.**

The fastening portion **30** of the mold **3** forms in its interior a second portion **304** of the molding cavity of the mold **3** (Figure **5**).
The first portion **324** of the molding cavity of the mold **3** extends over a height HP, considered according to the longitudinal axis of the complete molding cavity.
The second portion **304** of the molding cavity of the mold **3** extends over a height HB, considered according to the longitudinal axis of the complete molding cavity.
The ratio between the heights HB/HP is preferably comprised between 0.5 and 2 times, more preferably comprised between 0.7 and 1.3 times and more preferably comprised between 0.8 and 1.2 times.

Each fastening portion **30** and the tip portion **32** of a mold **3** are arranged for coupling, axially aligning the first **324** and the second portion **304** of the molding cavity, i.e. causing the central longitudinal axes of the first **324** and of the second portion **304** of the molding cavity to coincide.

For this purpose, one end of each fastening portion **30** of the mold **3** and the portion of the flange **322** at or more proximate to the root of the oblong extension **320** are arranged for coupling together, for example forming a male-female coupling as in the embodiment of Figure **5****.**

Preferably but not necessarily one end of each fastening portion **30** and the respective tip portion **32** of the mold **3** form respectively the male part and the female seat of said coupling, as shown for example in Figure **5****.**

Advantageously, the female seat is substantially the cast of the male end of the fastening portion **30.**

As shall be explained in more detail below, said coupling reduces the overall size of the molds **3** and assures a better seal against leakage of the cast material eliminating burrs and other aesthetic defects on the sides of the stick molded by the mold **3.**

The support arm **70** of each carriage or skid **7** is arranged for housing and maintaining in position the fastening portion **30** and the respective tip portion **32** of one or more molds **3.**

Preferably, during the normal operation of the machine **1,** the fastening portion **30** and the tip portion **32** of one or more molds **3** are arranged for coupling with the face or otherwise the upper side of a support arm **70,** the fastening portion **30** so as to project upwards from the face or upper side of the support arm **70** and the tip portion **32** so as to project downward from the face or lower side of the support arm **70.**

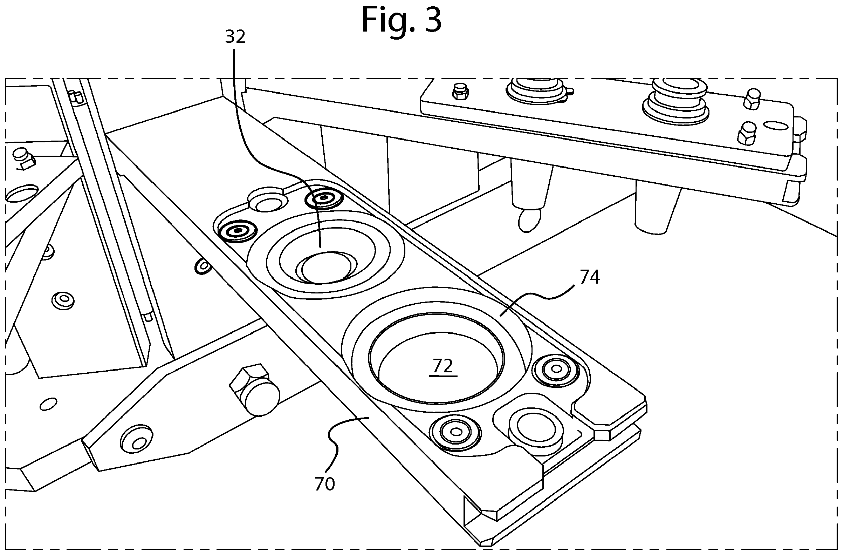

For this purpose, as shown in Figure **3****,** in each support arm **70** are advantageously obtained one or more through holes **72** and one or more flange seats **74** that extend around the respective hole **72,** so that a flange seat **74** can house the flange **322** of a mold portion **32** making the oblong extension **320** of said mold **32** pass through the through hole **72** (Figure **3****,** **5**).

Advantageously, the flange **322** is coupled by interference with the flange seat **74.**

Preferably, said interference is comprised between 0.1 and 0.6 millimetres, and more preferably comprised between 0.1 and 0.3 millimetres in radial direction, with reference to the axis AP of the ogive **32.**

Said interference makes it possible to position with considerable precision and repeatability the molding cavity **324** of the ogive with respect to the arm **70** to which they are fastened and to the fastening portions **30** of the plate **34** fastened on the same arm **70,** allowing the fastening portions **30** and the corresponding ogives **32** be positioned well coaxial and thus eliminating aesthetic defects such as the one shown in Figure **6****,** in which the fastening portion **130** of the stick **13** is highly off-axis with respect to the tip portion **132.**

Advantageously, the DS/HS ratio between the external diameter DS of the flange **322** and the total height HS of the ogive **32** is equal to or higher than **0.9** times, more preferably equal to or higher than **1,** and more preferably between **0.9-1.6** times or between **9.9-1.2** times.
Advantageously, the height HS is equal to or smaller than 45 millimetres, more preferably equal to or smaller than 40 millimetres or still more preferably equal to or smaller than 37 millimetres.

Advantageously, the SPM/DS ratio between the average thickness SPM and the external diameter DS of the flange **322** is equal to or greater than **0.08** times, more preferably equal to or greater than **0.1** times, still more preferably equal to or greater than **0.12** times, still more preferably equal to or greater than **0.13** times.

These dimensional ratios presuppose a relatively large and strong flange **322** with respect to the rest of the ogive **30** and they significantly contribute to position with prevision the molding cavity **324** of the ogives with respect to the arm **70** to which they are fastened and to the fastening portions **30** of the plate **34** fastened on the same arm **70.**

Advantageously, two or more fastening portions **30** are fastened on a same handling plate **34** which preferably has substantially oblong shape, for example rectangular.

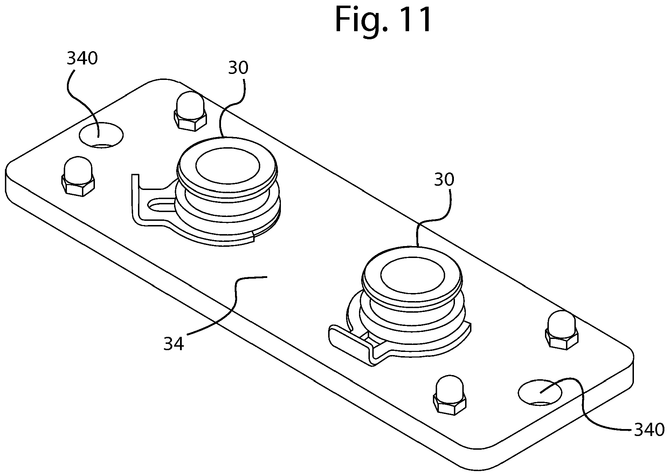

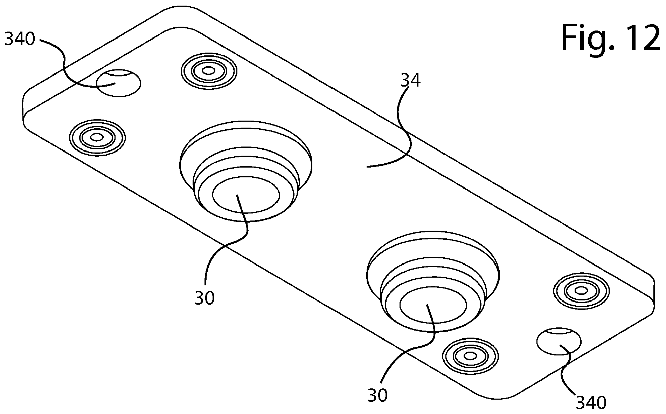

Each handling plate **34** can have for example substantially planar shape (Figures **11****,** **12****).**

As will be more readily apparent below, fastening two or more fastening portions **30** on a same handling plate **34** makes it possible to position the fastening portions **30** and compose the molds **3** with greater precisions and more rapidly by means of a mechanical manipulator and an automated process, increasing the production rate and capacity of the machine **1.**

The demolding station **6** is arranged for:
- maintaining in a precise position the tip portions **32** of the molds **3** during the casting and curing of the liquid that will form the cosmetic or medicinal stick **13;** and
- expanding them to extract the solidified stick **13** from the mould **3.**

Preferably, the demolding station **6** is positioned below the continuous conveyor **7** or at least below the support arms **70** moved thereby (Figure **8****).**

The demolding station **6** preferably comprises one or more vacuum containers **60,** each of which containing at least one containment support **62.**

Each vacuum container **60** can have substantially cylindrical overall shape.

Each containment support **62** can have substantially tubular shape.

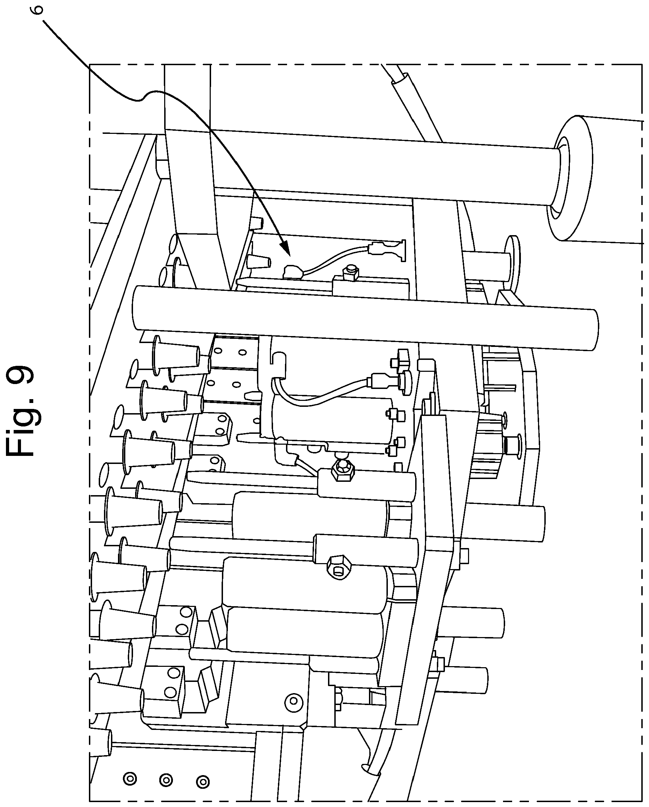

As in the embodiment of Figure **9****,** **10****,** **11** each vacuum container **60** can contain a single containment support **62.**

The demolding station **6** preferably further comprises one or more movable suction ducts **64,** each of which is made as a substantially rigid, for example metallic, segment of tube.

Each movable suction duct **64** is at least partially inserted in a respective containment support **62** and arranged for raising and lowering with respect thereto, for example sliding within it.

Each containment support **62** and each movable suction duct **64** is advantageously arranged for moving up and down in the respective vacuum container **60,** for example sliding within it.

Each containment support **62** forms an internal cavity **65** open superiorly and closed inferiorly for example by the upper end of a respective movable suction duct **64,** so as to house at least part of the oblong extension **320** of the tip portion **32** of a mold **3.**

Advantageously, the inner cavity **65** forms a cast substantially of all the outer surface of the oblong extension **320.**

However alternatively the inner cavity **65** can form a cast of only a part of the outer surface of the oblong extension **320,** or else form inner flanks that are not coupled with the oblong extension **320** and reproduce its cast only approximately or do not reproduce it at all.

Advantageously, the demolding station **6** is provided with one or more sealing gaskets, for example with O-rings, interposed for example between a movable suction duct **64** and a respective containment support **62** preventing air of the external environment from penetrating in the containment support **62** reducing the pneumatic vacuum present therein.

Preferably, the demolding station **6** comprises one or more duct actuators **68** arranged for displacing one or more movable suction ducts **64** with respect to the containment support **62** and/or to the vacuum container **60** for example to adapt to slightly different ogive formats.

The demolding station **6** can comprise a main fastening plate **69** - or other slide or carriage - fastened to the rest of the machine **1,** for example fastened to its chassis and actuated by an appropriate actuator, not shown, arranged for raising it and lowering it.

On the main fastening plate **69** can be mounted one or more vacuum containers **60,** the one or more duct actuators **68** and the one or more movable suction ducts **64.**

The one or more duct actuators **68** can connect to the respective movable suction ducts **64** through one or more movable plates **67.**

The casting station **5** is advantageously positioned below the continuous conveyor **7** or at least below the support arms **70** moved thereby (Figure **8****).**

In addition to one or more dispensing nozzles, not shown, the casting station **5** comprises one or more casting supports **50** arranged for bearing against the flange **322** when the lipstick or other liquid cosmetic, medicinal or protective product is cast in the corresponding mold **3.**

Each casting support **50** can comprise for example a tubular body having at least one open end **52** whose edge is arranged for passing through a respective through hole **72** of an arm **70,** thread above the oblong extension **320** of a tip portion **32** loaded on said arm **70** and bearing against a portion of a flange **322** of said tip portion **32** of a mold **3** (Figure **5****).**

Advantageously, the demolding station **6** and/or the casting station **5** are provided with one or more centring pins **500; 600** arranged for coupling with corresponding centring holes **700, 340** obtained respectively on the support arms **70** and/or more advantageously on the handling plates **34.**

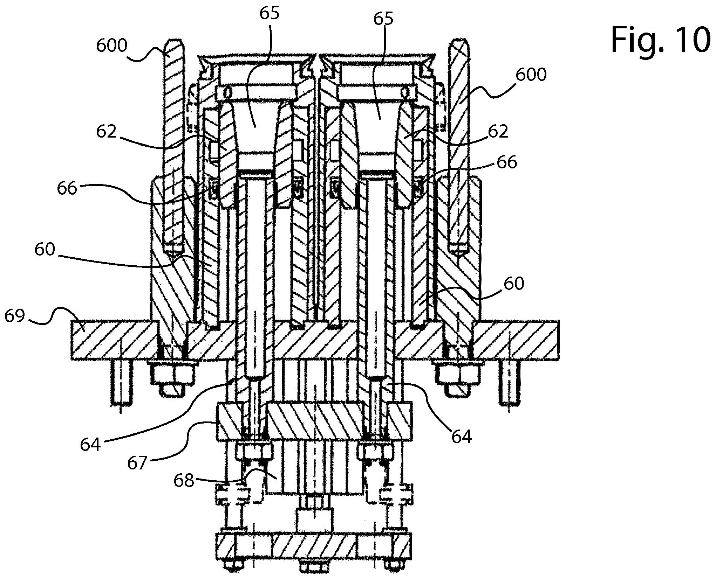

The pins **500, 600** are preferably positioned at or near respectively one or more casting supports 50 and one or more vacuum containers **60** (Figure **10****,** **11****).**

The pins **500, 600** are preferably fastened on the main fastening plate **69,** preferably oriented upwards.

Advantageously, the machine **1** is provided with a first mechanical manipulator, not shown, and arranged for putting the handling plates **34** on the arms **70** of the continuous conveyor and remove them therefrom, preferably to transfer them from the arms at the demolding stations **6** to the arms which are at the casting station **5,** as will be described more at length below.

An example of possible operation and utilisation of the machine **1** shall now be described.

Two tip portions **32,** or ogives **32,** were previously loaded, for example at the start of the work shift or the production of the current production lot, on each support arm **70** of the continuous conveyor **7,** making the oblong extensions **320** pass into the holes **72,** inserting the flanges **322** of the ogives **32** in the flange seats **74** of the arm **70** and the handling plate **34** in a corresponding seat obtained on the side or on the upper face of the arm **70.**

The aforementioned first mechanical manipulator, moreover, previously positioned a handling plate **34,** provided with two fastening portions **30,** on all arms **70** of the continuous conveyor **7** that are at and upstream of the demolding station **6** and towards which they are advancing.

The first mechanical manipulator removes, for example by lifting it vertically, the handling plate **34** laid on a first arm **70** that is at the demolding station **6** and whose two ogives **32** - conventionally called first ogives - are above the corresponding vacuum containers **60,** while a second arm **70** downstream of the first arm 70, for example immediately downstream thereof, is at the casting station **5** positioning two other empty ogives **30** - conventionally called second ogives **32** - above two or more corresponding casting supports **50.**

By so doing, the fastening portions **130** of the sticks **13** of now solidified lipstick are bared.

The main fastening plate **69** is lifted by the respective actuator introducing:
- the oblong extensions **320** of the four first ogives **30** in the corresponding vacuum containers **60** and in the inner cavities **65** of the containment supports **62;** and
- the oblong extensions **320** of the four second ogives **32** in the corresponding casting supports **50,** making the casting supports **50** pass in the through holes **72** until the edge of the upper end of the supports **50** bear against respective flanges **322** of the second ogives **32.**

An appropriate vacuum generating system produces a pneumatic vacuum in the inner cavities **65** expanding the first ogives **32,** in particular their oblong extensions **320,** detaching them from the sticks **13** of lipstick solidified inside them.

Preferably, the tip portion **132** of the stick is completely detached, with the application of a single pneumatic vacuum and in a single operation, from the entire casting cavity **324** of the ogives **32.**

A second mechanical manipulator fits, preferably automatically, the cases of the lipstick packages, that is the so-called casings, on the fastening portions **130** and removes from the ogives **32** the casings together with the sticks **13.**

Concurrently, the first mechanical manipulator places the aforesaid handling plate **34,** picked up from the upstream arm **70,** on the downstream arm **70** at the casting station **5** inserting the male portions of the fastening portions **30** of the molds **3** into the corresponding female seats of the second ogives **32,** compressing the flanges **322** themselves between said male portions and the end edge of the casting supports **50.**

By so doing, the fluid lipstick - or other cast material - is prevented from leaking between the second ogives and the fastening portions **30** of the molds **3,** considerably reducing, when not altogether eliminating, aesthetic defects on the sides of the stick of lipstick, sides that appear almost perfectly smooth.

A dispensing nozzle, not shown, casts liquid lipstick or other liquid material into the casting cavities of the molds **3** present on the second downstream arm **70.**

To fasten the handling plates **34** on the arms **70** or more in general on the shuttles or carriages **0** of the continuous conveyor **7,** the ones and/or the others are advantageously provided with permanent magnets **702, 704.**

However, advantageously when the main fastening plate **69** or more in general the casting station **5** and/or the demolding station **6** are lifted, the respective centring pins **500, 600** are arranged for being inserted into the centring holes **340** of the plates **34,** possibly after traversing the holes **700:** in this way, the centring pins allow to position with considerable precision the plates **34** and the related bushings **30** or other fastening portions **30** of the mold **3** with respect to the casting supports **50** and to the containment supports **62** (Figures **9****,** **10**), then contributing to position with considerable precision the casting cavities of the fastening portions **30** and of the ogives **32** and then reducing the aesthetic imperfections and other defects in the lipsticks or other cast sticks **13.**

Thereupon the continuous conveyor **7** makes its carriages or slides advance transporting the molds **3** filled with lipstick, or another liquid cosmetic, protective or medicinal product, towards one or more cooling stations, not shown herein.

After traversing said cooling stations, the continuous conveyor **7** by further advancing makes the molds **3** and their content, now cured or solidified, reach the demolding station **6.**

The preceding teachings allow to obtain a machine **1** able to carry out in fully automatic mode, with high production rate and with low scrap percentages the entire molding cycle of lipsticks or other cosmetics or medicinal products in the form of consumable sticks, starting from casting to the extraction of the cast product from the molds and to its insertion in a casing or another holder. Since only a portion of stick 13 proximate to the tip instead of the entire stick is formed in a portion of mold of silicone material or otherwise very soft material, it is necessary to deform the tip portion 32 - or ogive - of the mold to a lesser extent than when the entire stick is formed in the ogive, extending the useful life of the tip portions of the mold; this longer life make the ogives 32 more suited for casting particularly aggressive materials, for example because they contain particular solvents.

The embodiments described above are susceptible to numerous modifications and variants, without departing from the scope of the present invention.

For example, the continuous conveyor **7** with carriages or skids **9** can be replaced for example by one or more rotating carrousels.

The continuous conveyor **7** can advance in steps or with continuous movement.

Every reference in this description to "an embodiment", "an embodiment example" means that a particular feature or structure described in relation to such embodiment is included in at least one embodiment of the invention and in particular in a specific variant of the invention as defined in a main claim.

The fact that such expressions appear in various passages of the description does not imply that they are necessarily referred solely to the same embodiment.

In addition, when a feature, element or structure is described in relation to a particular embodiment, it is observed that it is within the competence of the person skilled in the art to apply such feature, element or structure to other embodiments.

Numerical references that differ only by different superscript markers, e.g. **21', 21", 21''',** unless otherwise specified indicate different variants of an element designated in the same way.

Moreover, all the details can be replaced by technically equivalent elements.

For example, the materials used, as well as their dimensions, can be of any type according to the technical requirements.

It must be understood that an expression of the type "A *comprises* B, C, D" or "A *is formed by* B, C, D" comprises and describes also the particular case in which "A *consists of* B, C, D".

The expression "*A comprises an element B",* unless otherwise specified, is to be construed as "A *comprises one or more elements B".*

The examples and lists of possible variants of the present application are to be construed as non-exhaustive lists.

## Claims

1. A process for forming sticks (**13**) of cosmetic, protective and/or medicinal products which form a free tip or end, such as sticks of lipsticks, lip glosses, lip balm, comprising the following operations:
S.**1.1**) providing one or more molds for sticks (**3**) each of which forms a molding cavity and in turn comprises:
- a fastening portion (**30**) of mold, made of a substantially more rigid material and which forms at least a portion (**304**) of the molding cavity; and
- a tip portion (**32**) of mold made of a material that is substantially softer and more flexible than the material of the fastening portion (**30**) of mold, wherein the fastening portion (**30**) of mold is arranged for forming at least the fastening portion (**130**) through which the stick (**13**) is fastened to the rest of the casing of the complete cosmetic, protective and/or medicinal product and the tip portion (**32**) of mold is arranged for forming at least the tip portion (**132**) or of the free end of the finished stick;
S.**1.2**) casting into the mold for sticks (**3**) the fluid material that will form the stick (**13**) and making it harden therein;
S.**1.3**) removing from the mold for sticks (**3**) the fastening portion (**30**) of mold exposing the fastening portion (**130**) of the stick (**13**);
S.**1.4**) extracting the hardened stick (**13**) from the mold for sticks (**3**).

2. Process according to claim **1,** wherein at least part of the tip portion **(32)** of mold, for example at least part of its forming cavity (**304**), is made of one or more of the following materials: a polymeric and/or elastomeric material, a silicone-based material, a material having a hardness comprised between 5 and 40 Shore A and more preferably between 8 and 20 Shore A degrees.

3. Process according to claim **1** or **2,** wherein the tip portion (**32**) of the mold (**3**) forms an oblong extension **(320)** and a flange (**322**) that extends around an end of the oblong extension (**320**), and wherein the ratio (DS/HS) between the outer diameter (DS) of the flange (**322**) and the overall height (HS) of the tip portion **(32)** of the mold **(3)** is equal to or higher than **0.9** times.

4. Process according to claim **3,** comprising the following operations:
S**.4.1)** providing a casting station **(5)** arranged for carrying out at least the operation S.**1.2**) and a demolding station (**6**) arranged for carrying out at least the operation S.**1.3**) and/or S.**1.4**);
S.**4.2**) providing a continuous conveyor (**7**) arranged for transporting one or more molds **(3)** from the casting station (**5**) to the demolding station **(6),** wherein the continuous conveyor **(7)** forms one or more flange seats (**74**) ;
**S.4.3)** inserting a flange (**322**) of a tip portion (**32**) of one of said molds (**3**) in one of said flange seats (**74**), coupling said flange (**322**) with said flange seat (**74**) with an interference of between 0.1 and 0.3 millimetres.

5. Process according to one or more preceding claims, comprising the following operations:
S.**5.1**) providing a casting station (**5**) arranged for carrying out at least the operation S.**1.2**) and a demolding station (**6**) arranged for carrying out at least the operation S.**1.3**) and/or S**.1.4**);
S.**5.2**) composing one of said molds (**3**) coupling the related fastening mold portion (**30**) and the related tip mold portion (**32**);
S.5.3) filling the molding cavity of said mold (**3**) with the liquid of the lipstick or other cosmetic, protective or medicinal product to be molded;
S.**5.4**) making said liquid harden in said molding cavity;
S.**5.5**) removing the fastening mold portion (**30**) from the tip mold portion (**32**) baring at least the fastening portion (**130**) of the stick (**13**).

6. Process according to claim **5**, comprising the following operations:
S.**6.1**) after the operation S.**5.5**) inserting a casing for packages of lipstick, lip gloss, lip balm or other cosmetics or medicinal products in stick form on the bared fastening end **(130)** of the stick **(13);**
S.**6.2**) extracting the stick **(13)** from the molding cavity of the mold **(13)** together with the casing.

7. Process according to one or more claims **4-6,** comprising the following operations:
S.**7.1**) in the operation S.**1.3**) remove the fastening portion **(30)** of a first mold **(3)** from a first tip mold portion **(32),** where said first tip mold portion **(32)** is at the demolding station **(6);**
S.**7.2**) coupling said fastening portion **(30)** to a second tip mold portion **(32)** which is at the casting station (**5**).

8. Process according to one or more of the preceding claims, wherein two or more among the operations S.**1.2,** S**.1.3,** S.**1.4,** S**.5.2,** S**.5.3,** S**.5.4,** S**.5.5,** S**.6.1,** S**.6.2,** S**.7.1,** S**.7.2** and for example all, are carried out automatically by a machine (**1**).

9. Process according to one or more of the claims from **5** to **7,** wherein one or more operations S**.5.1,** S.**5.2**. S**.5.5,** S**.6.1,** S**.6.2,** S**.7.1,** S**.7.2)** are carried out automatically by one or more mechanical manipulators.

10. Process according to one or more of the preceding claims, wherein at least a part of the fastening mold portion **(30)** is made of a metallic material.

11. Machine (**1**) for carrying out a process having the characteristics according to one or more of the previous claims, comprising:
C.**11.1**) said one or more molds for sticks (**3**) each of which forms a molding cavity and in turn comprises:
C.**11.1.1)** said fastening mold portion (**30**), made of a substantially more rigid material and which forms at least a portion (**304**) of the molding cavity; and
C**.11.1.2**) said tip mold portion (**32**) made of a material that is substantially softer and more flexible than the material of the fastening mold portion, wherein the fastening mold portion (**30**) is arranged for forming at least the fastening portion (**130**) through which the stick (**13**) is fastened to the rest of the casing of the complete cosmetic, protective and/or medicinal product and the tip mold portion (**32**) is arranged for forming at least the tip portion (**132**) or of the free end of the finished stick;
C.**11.2**) a casting station (**5**) arranged for casting into the mold for sticks (**3**) the fluid material that will form the stick (**13**) and making it harden therein;
C.**11.3**) a demolding station (**6**) arranged for removing from the mold for sticks (**3**) the fastening mold portion (**30**) exposing the fastening portion (**130**) of the stick (**13**) and/or extracting the hardened stick (**13**) from the mold for sticks (**3**).

12. Mold for sticks (**13**) of lipsticks, lip glosses or other cosmetic, protective or medicinal products, comprising a tip portion (**32**) arranged for forming at least the tip portion (**132**) or other free end of the finished stick (**13**), and wherein:
- said tip portion (**32**) forms an oblong extension (**320**) and a flange (**322**) that extends around an end of the oblong extension (**320**);
- the ratio (DS/HS) between the outer diameter (DS) of the flange (**322**) and the total height (HS) of the tip portion (**32**) of the mold (**3**) is equal to or greater than **0.9** times.
